# EUROPÄISCHE PATENTSCHRIFT

(11) **EP 2 037 067 B1**
(45) Veröffentlichungstag und Bekanntmachung des Hinweises auf die Patenterteilung: **26.11.2014**
(21) Anmeldenummer: 07116078.2
(22) Anmeldetag: 11.09.2007
(51) Int. Cl.: E05F 1/10, E05F 5/00, E05F 15/12

(54) **Antriebseinrichtung für eine Kraftfahrzeugtür**
Actuator device for a vehicle door
Dispositif d'entraînement pour une porte de véhicule

(43) Veröffentlichungstag der Anmeldung: 18.03.2009
(73) Patentinhaber: U-Shin Deutschland Zugangssysteme GmbH, 85253 Erdweg (DE)
(72) Erfinder: Orth, Dietmar, D-85253, Erdweg (DE); Kummer, Frank, D-85253, Erdweg (DE)
(74) Vertreter: Larger, Solène

(56) Entgegenhaltungen:
- DE-A1- 3 733 781
- US-A- 3 398 484
- US-A- 3 727 472
- US-B1- 6 516 567

## Beschreibung

Die Erfindung bezieht sich auf eine Antriebseinrichtung für eine Kraftfahrzeugtür, wobei der Begriff "Kraftfahrzeugtür" im weiten Sinne zu verstehen ist und sowohl eine Seitentür, als auch eine Heckklappe oder einen Kofferraumdeckel umfasst.

Solche Antreibseinrichtungen erfreuen sich zimmer größerer Beliebtheit, vor allem seit diese Antriebe nicht mehr hydraulisch, sondern nunmehr über einen Elektromotor angetrieben werden.

Dadurch sind solche Antriebe wesentlich leichter in Fahrzeuge einzubauen und können sogar als Option nachgerüstet werden. Auch können solche Antriebe schneller an neue Fahrzeugmodelle angepasst werden.

In der weiteren Entwicklung werden diese elektrischen Antriebe nun als Spindelantriebe ausgeführt und soweit verkleinert, dass diese in den Bauraum von handelsüblichen Gasdruckfedem Platz finden und an deren Stelle zwischen der Karosserie und der Kraftfahrzeugtür montiert werden.

US 3,398,484 beschreibt zum Beispiel einen solchen Spindelantrieb zum automatischen Öffnen und Schließen einer Fahrzeugtür. Dabei wird die Spindel über ein Übersetzungsgetriebe von einem Motor angetrieben, wobei eine drehfest montierte Mutter auf der Spindel sitzt und durch die Drehung der Spindel hin und her gefahren werden kann. Die Spindelmutter ist mit einem Rohr so verbunden, dass letzteres herausfährt und die Kraftfahrzeugtür geöffnet wird.

US 6 516 567 beschreibt einen Spindelantrieb mit einer innnerer Spindelmutter. DE 37 33 781 beschreibt einen Spindelantrieb mit einer aus Kunststoff gefertigt Spindelmutter. Die Spindelmutter ist eine wichtige Schnittstelle für einen solchen Spindelantrieb, da hohe Kräfte übertragen werden müssen. Deshalb wird in den bekannten Spindelantrieben die Spindelmutter aus Metall gefertigt und in einem separaten, kostenintensiven Montageschritt, meist durch verschweißen, in die Schubstange eingebaut.

Aufgabe der vorliegenden Erfindung ist es einen Spindelantrieb zu schaffen, der eine einfachere und kostengünstigere Bauweise eines Spindelantriebs erlaubt.

Diese Aufgabe wird erfindungsgemäß gelöst durch eine Antriebseinrichtung zum Bewegen einer Kraftfahrzeugtür, insbesondere einer Seitentür, einer Heckklappe oder eines Heckdeckels, um diese von einer ersten Stellung in eine zweite Stellung zu bewegen, umfassend ein teleskopartig ausfahrbares, aus einem ersten und einem zweiten Gehäuserohr gebildeten rohrförmigen Außengehäuse, dessen eines Ende an der Karosserie eines Kraftfahrzeugs und dessen anderes Ende an der Kraftfahrzeugtür befestigbar ist, einem in dem Außengehäuse gelagerten Spindelantrieb mit einer Gewindespindel, einem Elektromotor, der zum Antrieb der Kraftfahrzeugtür mit der Gewindespindel drehbeweglich verbunden ist und mit einer drehfest in einem Führungsrohr angeordneten Spindelmutter, die bei Drehung der Gewindespindel eine Translationsbewegung entlang der Spindelachse ausführt und diese Translationsbewegung auf ein Schubrohr überträgt, so dass die Gehäuserohre sich teleskopartig relativ zueinander bewegen, um die Kraftfahrzeugtür von der ersten in die zweite Stellung zu bewegen, dadurch gekennzeichnet, dass die Spindelmutter aus Kunststoff gefertigt ist und das Schubrohr Öffnungen am Außenumfang aufweist, in die Haltefortsätze der Spindelmutter eingreifen.

Dadurch, dass die Spindelmutter aus Kunststoff gefertigt ist, kann die Fertigung wesentlich vereinfacht und kostengünstig gestaltet werden. Diese Ausführung hat weiterhin den Vorteil, dass sich keine Probleme bezüglich der Materialpaarungen Schubrohr - Spindelmutter bzw. Spindelmutter - Spindel ergeben.

Die aus Kunststoff gefertigte Spindelmutter wirkt sich auch positiv bei der Geräuschentwicklung aus und vermindert die Entstehung und Übertragung von Vibrationen auf die Karosseriebauteile.

Vorteilhaft hat es sich erwiesen, dass die Spindelmutter durch Einspritzen durch die Öffnungen direkt am Schubrohr gefertigt und eingepasst ist. Dies ist ein einfacher kostengünstiger Fertigungsschritt, der es erlaubt eine stabile, widerstandfähige Verbindung zwischen dem Schubrohr und der Spindelmutter herzustellen.

In einer weiteren Fortbildung besitzt die Spindelmutter in Längsrichtung jeweils zwei, über eine Brücke verbundene Haltefortsätze, die in zwei, in Längsrichtung hintereinander liegende Öffnungen im Schubrohr eingreifen. Somit ist ein optimaler Halt gewährt.

Weitere erfindungsmäßige Merkmale und Vorteile ergeben sich aus den folgenden, anhand von Figuren erläuterten Ausführungsbeispielen. Es zeigen:
- Figur 1 zeigt ein Kraftfahrzeug, mit einer erfindungsmäßigen Antriebseinrichtung,
- Figur 2 zeigt die erfindungsmäßige Antreibseinrichtung im Längsschnitt,
- Figur 3 zeigt das Schubrohr mit der erfindungsmäßigen Spindelmutter in einer Perspektivansicht,
- Figur 4 zeigt das Schubrohr in einer Perspektivansicht vor der Fertigung der Spindelmutter, und
- Figur 5 zeigt die erfindungsmäßigen Spindelmutter in einer Perspektivansicht.

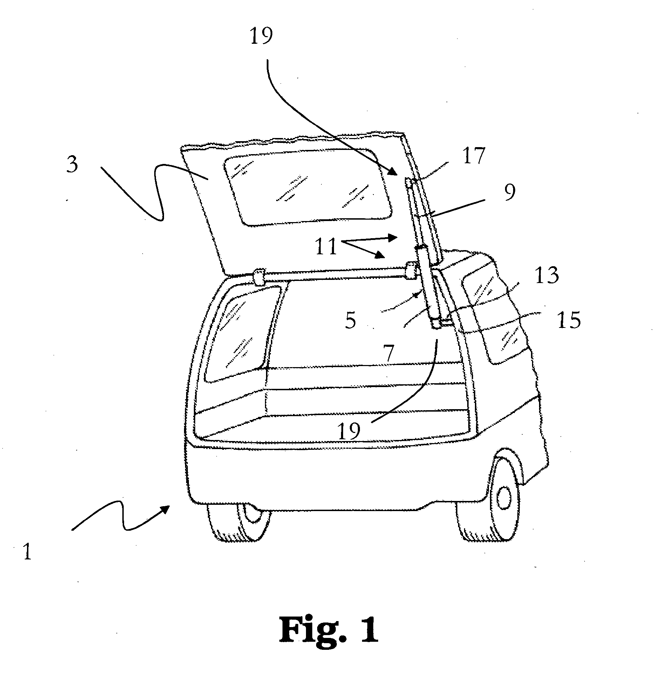

Die Figur 1 zeigt schematisch das Heck eines Kraftfahrzeugs 1 mit einer geöffneten Kraftfahrzeugtür 3, in diesem Falle eine Heckklappe, und einer erfindungsmäßigen Antriebseinheit 5, welche seitlich angebracht ist.

Im Zusammenhang mit dieser Erfindung wird unter Kraftfahrzeugtür sowohl eine Seitentür, eine Heckklappe oder ein Heckdeckel oder ein sonstiges bewegliches Verschlusselement der Karosserie verstanden.

Durch die Antriebseinheit 5 kann die Heckklappe 3 von einer ersten in eine zweite Position bewegt werden. Vorteilhafterweise wird die Heckklappe 3 von der Antriebseinheit 5 von einer vollständig geschlossenen Stellung in eine vollständig geöffnete Stellung geschwenkt und gegebenenfalls wieder zurück. Natürlich ist auch jede Zwischenstellung möglich.

Dazu weist die Antriebseinrichtung ein teleskopartig ausfahrbares, aus einem ersten 7 und einem zweiten 9 Gehäuserohr gebildeten rohrförmiges Außengehäuse 11 auf, dessen eine Ende 13 an der Karosserie 15 des Kraftfahrzeugs 1 und dessen anderes Ende 17 an der Kraftfahrzeugtür / Heckklappe 3, zum Beispiel durch Kugelpfannenverbindungen 19 befestigt ist. Die Antriebseinrichtung ist somit an Stelle der sonst üblichen Gasfedern montiert.

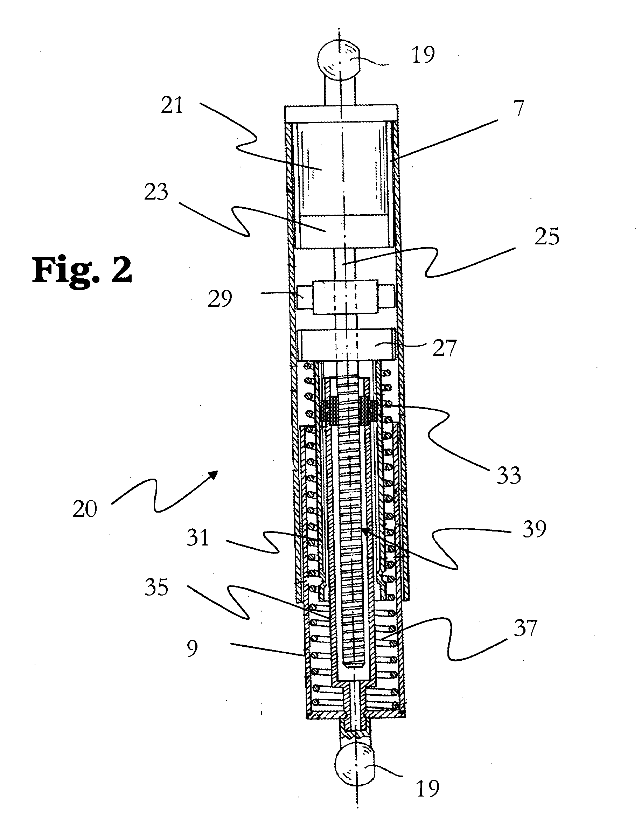

Wie in der Figur 2 ersichtlich, umfasst die Antriebseinheit 5 weiterhin einen Spindelantrieb 20 mit einem Elektromotor 21, dessen Ausgangswelle eine untersetzende, nicht selbstblockierende Getriebeeinheit 23 antreibt. An den Antrieb der Getriebeeinheit 23 ist eine Gewindespindel 25 angeschlossen, die von einem Lager 27 abgestützt wird. Zwischen dem Lager 27 und der Getriebeeinheit 23 ist optional eine Bremse 29 vorgesehen, die zum Beispiel dafür benutzt wird die Kraftfahrzeugtür in einer Zwischenstellung zu halten.

Der Spindelantrieb 20 weist weiterhin eine drehfest in einem Führungsrohr 31 angeordnete Spindelmutter 33 auf. Bei Drehung der Spindel 25 führt die Spindelmutter 33 eine Translationsbewegung entlang der Spindelachse in den dafür vorgesehenen Führungen des Führungsrohrs 31 aus.

In dem hier dargestellten Ausführungsbeispiel ist ein Schubelement in Form eines Schubrohres 35 vorgesehen, dessen eines Ende eine Spindelmutter 33 trägt und dessen anderes Ende mit dem zweiten Gehäuserohr 9, als auch mit der dazugehörigen Befestigung, zum Beispiel die Kugelpfannenverbindung 19, verbunden ist, so dass die Translationsbewegung der Spindelmutter 33 sich auf das Schubrohr 35 überträgt, und somit die Gehäuserohre 7 und 9 sich teleskopartig relativ zueinander bewegen, um die Kraftfahrzeugtür von der ersten in die zweite Stellung zu bewegen.

In dem Außengehäuse 11 ist eine Schraubendruckfeder 37 zur Kraftunterstützung des Spindelantriebs 20 beim Auseinanderfahren der Gehäuserohre 7 und 9 gelagert.

Diese Schraubendruckfeder 37 umgibt das Führungsrohr 31 der Spindelmutter 33 und wird von dieser geführt, zum Beispiel um ein Einknicken zu verhindern.

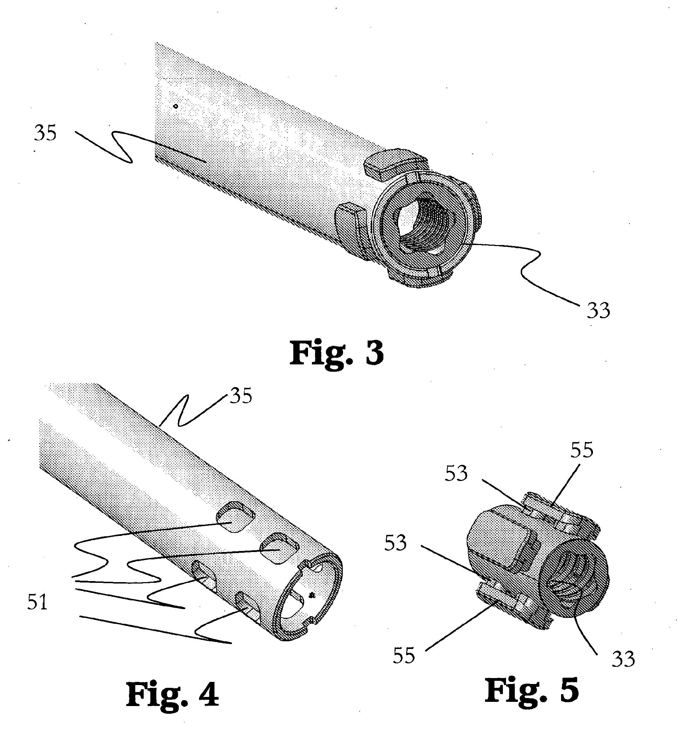

Erfindungsgemäß ist die Spindelmutter 33 aus Kunststoff gefertigt. Wie in den Figuren 3 und 4 ersichtlich, sind zur Halterung der Spindelmutter am Schubrohr 35 Öffnungen 51 am Außenumfang vorgesehen. Vorteilhafterweise sind vier, regelmäßig über den Umfang verteilte Paare von Öffnungen 51 vorgesehen, wobei die Öffnungen 51 eines Paares in Längsrichtung des Schubrohres hintereinander liegen. Alternativ können auch noch mehrere in Längsrichtung hintereinander liegende Öffnungen und zugeordnete, über jeweils eine Brücke verbundene Haltevorsätze vorgesehen sein, so dass die Haltekräfte pro Haltefortsatz verringert sind und auch Risiken bei evt. Bruch eines einzelnen Haltefortsatz noch effizienter vorgebeugt werden kann.

In diese Öffnungen 51 greifen Haltefortsätze 53 der Spindelmutter 33 ein. Jeweils zwei, in Längsrichtung hintereinander liegende Haltefortsätze 53 sind über eine Brücke 55 verbunden (siehe Figur 5), die den Halt der Spindelmutter 33 am Schubrohr 35 verstärken.

Vorteilhafterweise ist die Spindelmutter 33 durch Einspritzen durch die Öffnungen 51 direkt am Schubrohr gefertigt und eingepasst.

Somit kann die Spindelmutter sehr kostengünstig gefertigt werden. Auch können somit Fertigungstoleranzen zwischen Schubrohr und Spindelmutter vermieden werden. Über die mit einer Brücke 55 verbundenen Haltefortsätze 53 wird eine optimale Halterung der Spindelmutter 33 gewährleistet.

## Patentansprüche

1. Antriebseinrichtung zum Bewegen einer Kraftfahrzeugtür (3), insbesondere einer Seitentür, einer Heckklappe oder eines Heckdeckels, um diese von einer ersten Stellung in eine zweite Stellung zu bewegen, umfassend ein teleskopartig ausfahrbares, aus einem ersten (7) und einem zweiten (9) Gehäuserohr gebildeten rohrförmigen Außengehäuse (11), dessen eines Ende an der Karosserie (15) eines Kraftfahrzeugs (1) und dessen anderes Ende an der Kraftfahrzeugtür (3) befestigbar ist, einem in dem Außengehäuse (11) gelagerten Spindelantrieb (20) mit einer Gewindespindel (25), einem Elektromotor (21), der zum Antrieb der Kraftfahrzeugtür (1) mit der Gewindespindel (25) drehbeweglich verbunden ist und mit einer drehfest in einem Führungsrohr (31) angeordneten Spindelmutter (33), die bei Drehung der Gewindespindel (25) eine Translationsbewegung entlang der Spindelachse ausführt und diese Translationsbewegung auf ein Schubrohr (35) überträgt, so dass die Gehäuserohre (7, 9) sich teleskopartig relativ zueinander bewegen, wobei die Spindelmutter aus Kunststoff gefertigt ist und das Schubrohr (35) Öffnungen (51) am Außenumfang aufweist, in die Haltefortsätze (53) der Spindelmutter (33) eingreifen, **dadurch gekennzeichnet, dass** die Spindelmutter (33) in Längsrichtung jeweils zwei oder mehrere über eine Brücke (55) verbundene Haltefortsätze (53) aufweist, die in zwei oder mehrere in Längsrichtung hintereinander liegende Öffnungen (51) im Schubrohr eingreifen.

2. Antriebseinrichtung nach Anspruch 1, **dadurch gekennzeichnet, dass** die Spindelmutter durch Einspritzen durch die Öffnungen (51) direkt am Schubrohr (35) gefertigt und eingepasst ist.

## Claims

1. A drive device for moving a motor vehicle door (3), in particular a side door, a tailgate or a boot lid, in order to move it from a first position into a second position, comprising a tubular outer housing (11) which is extensible in the manner of a telescope and is formed from a first housing tube (7) and a second housing tube (9) and one end of which is capable of being fastened to the body (15) of a motor vehicle (1) and the other end of which is capable of being fastened to the motor vehicle door (3), a spindle drive (20) mounted in the outer housing (11) and having a threaded spindle (25), an electric motor (21), which is connected to the threaded spindle (25) in a rotationally movable manner in order to drive the motor vehicle door (1), and a spindle nut (33) which is arranged in a guide tube (31) in a rotationally fixed manner and which, as the threaded spindle (25) rotates, performs a translational movement along the spindle axis and transmits this translational movement to a thrust tube (35), so that the housing tubes (7, 9) move relative to each other in the manner of a telescope, wherein the spindle nut is produced from plastics material and the thrust tube (35) has openings (51) on the external periphery into which holding extensions (53) of the spindle nut (33) engage, **characterized in that** in the longitudinal direction the spindle nut (33) has in each case two or more holding extensions (53) which are connected by way of a bridge (55) and which engage in two or more openings (51) situated one behind the other in the longitudinal direction in the thrust tube.

2. A drive device according to claim 1, **characterized in that** the spindle nut is produced directly on the thrust tube (35) by injection through the openings (51) and is adapted to the thrust tube (35).

## Revendications

1. Dispositif d'entraînement servant à déplacer une porte de véhicule automobile (3), en particulier une porte latérale, un hayon ou un capot arrière, afin d'amener ladite porte d'une première position dans une deuxième position, comprenant un boîtier extérieur (11) tubulaire pouvant se déployer de manière télescopique, formé à partie d'un premier tube de boîtier (7) et d'un deuxième tube de boîtier (9), dont une extrémité peut être fixée au niveau de la carrosserie (15) d'un véhicule automobile (1) et dont l'autre extrémité peut être fixée au niveau de la porte de véhicule automobile (3), un entraînement à broche (20) logé dans le boîtier extérieur (11), 1 pourvu d'une broche filetée (25), d'un moteur électrique (21), qui est relié de manière mobile en rotation à la broche filetée (25) aux fins de l'entraînement de la porte de véhicule automobile (1), ainsi que d'un écrou de broche (33) disposé de manière solidaire en rotation dans un tube de guindage (31), lequel écrou de broche exécute, lors de la rotation de la broche filetée (25), un déplacement de translation le long de l'axe de broche et imprime ledit déplacement de translation sur un tube de poussée (35) de sorte que les tubes de boîtier (7, 9) se déplacent l'un par rapport à l'autre de manière télescopique, sachant que l'écrou de broche est fabriqué à partir d'une matière plastique et que le tube de poussée (35) présente au niveau de la circonférence extérieure des ouvertures (51), avec lesquelles des protubérances de maintien (53) de l'écrou de broche (33) viennent en prise, **caractérisé en ce que** l'écrou de broche (33) présente dans la direction longitudinale respectivement deux ou plusieurs protubérances de maintien (53) reliées par l'intermédiaire d'un pont (55), lesquelles viennent en prise avec deux ou plusieurs ouvertures (51) dans le tuyau de poussée situées les unes derrière les autres dans la direction longitudinale.

2. Dispositif d'entraînement selon la revendication 1, **caractérisé en ce que** l'écrou de broche est fabriqué et inséré par injection à travers les ouvertures (51) directement au niveau du tube de poussée (35).
